(19) Europäisches Patentamt

European Patent Office

Office européen des brevets

(11) **EP 0 755 512 B1**

(12) **EUROPÄISCHE PATENTSCHRIFT**

(45) Veröffentlichungstag und Bekanntmachung des Hinweises auf die Patenterteilung:
**13.11.2002   Patentblatt 2002/46**

(21) Anmeldenummer: **96901688.0**

(22) Anmeldetag: **31.01.1996**

(51) Int Cl.$^7$: **G01N 27/407**, G01N 27/406

(86) Internationale Anmeldenummer:
**PCT/DE96/00131**

(87) Internationale Veröffentlichungsnummer:
**WO 96/024051 (08.08.1996 Gazette 1996/36)**

(54) **KERAMISCHE SCHICHTSYSTEME, INSBESONDERE FÜR GASSENSOREN**

CERAMIC LAYER SYSTEM, ESPECIALLY FOR GAS SENSORS

SYSTEMES CERAMIQUES STRATIFIES, NOTAMMENT POUR DETECTEURS DE GAZ

(84) Benannte Vertragsstaaten:
**DE FR GB IT**

(30) Priorität: **02.02.1995  DE 19503309**

(43) Veröffentlichungstag der Anmeldung:
**29.01.1997   Patentblatt 1997/05**

(73) Patentinhaber: **ROBERT BOSCH GMBH**
**70442 Stuttgart (DE)**

(72) Erfinder:
• **FRIESE, Karl-Hermann**
**D-71229 Leonberg (DE)**
• **WEBER, Lothar**
**D-70499 Stuttgart (DE)**
• **GRUENWALD, Werner**
**D-70839 Gerlingen (DE)**
• **LINDEMANN, Gert**
**D-72805 Lichtenstein (DE)**
• **NEUMANN, Harald**
**D-71665 Vaihingen (DE)**
• **EISELE, Ulrich**
**D-70199 Stuttgart (DE)**

(56) Entgegenhaltungen:
EP-A- 0 189 038          WO-A-94/01762
AU-A- 513 552            DE-A- 2 810 134
DE-A- 3 942 773          US-A- 5 384 030

• **PATENT ABSTRACTS OF JAPAN vol. 10 no. 382 (P-529) [2439] ,20.Dezember 1986 & JP,A,61 172054 (NGK SPARK PLUG CO) 2.August 1986,**

**Beschreibung**

Stand der Technik

Die Erfindung betrifft keramische Schichtsysteme mit mindestens zwei benachbarten Schichten, deren Leitfähigkeiten sich erheblich unterscheiden. Unter Leitfähigkeit wird im Rahmen dieser Erfindung die Eigenschaft eines Materials verstanden, unter bestimmten Bedingungen Leitungsvorgänge zu ermöglichen. Ein Beispiel für ein derartiges keramisches Schichtsystem ist in einer bestimmten, später näher beschriebenen Ausführungsform von Gassensoren zur Bestimmung von Gasen enthalten, die in geringen Mengen in einem Überschuß anderer Gase vorliegen, beispielsweise von Sauerstoff, Kohlenmonoxid, Wasserstoff und/oder anderen verbrennbaren Anteilen in Abgasen von Verbrennungsmotoren. In diesem Fall beziehen sich die Leitfähigkeiten auf die Sauerstoff ionenleitung bei höheren Temperaturen. In der Technik verbreitet sind Gassensoren, die als wesentliche Elemente eine dem Gasgemisch ausgesetzte erste Elektrode, eine über eine Diffusionsbarriere ebenfalls mit dem Gasgemisch in Verbindung stehende zweite Elektrode sowie eine Referenzelektrode enthalten. Alle Elektroden stehen in Kontakt mit einem bei höheren Temperaturen ionenleitfähigen Material und sind dadurch leitend miteinander verbunden. Als ionenleitfähiges Material hat sich insbesondere Zirkondioxid bewährt. Eingebaute Heizelemente sorgen für die Temperaturen, bei denen Ionenleitung stattfindet, in der Regel 450 bis 800°C. Diese Temperaturen werden im folgenden auch als die Betriebstemperatur des Gassensors bezeichnet. Die von den Elektroden abgenommenen Meßsignale zeigen die Konzentrationen der zu bestimmenden Gase bzw. deren Veränderung an und gestatten, den Betriebszustand des Motors zu regeln.

Die genannten Bestandteile der Gassensoren sind mechanisch empfindlich und werden daher auf einer vergleichsweise starken keramischen Substratschicht angeordnet bzw. in eine solche Substratschicht eingebettet. Die keramische Substratschicht kann ebenfalls aus Zirkondioxid bestehen. Das hat den Vorteil, daß die keramische Substratschicht, die im allgemeinen aus einer keramischen Substratfolie entsteht, und die ionenleitende Schicht, die im allgemeinen aufgedruckt wird, beim Co-sintern, einer Stufe des Herstellungsverfahrens, ohne Phasensprung fest miteinander verbunden werden. Bei Temperaturänderungen treten daher keine Spannungen auf, die die Integrität des Gassensors ungünstig beeinflussen können. Nachteilig ist jedoch, daß die Heizelemente gegenüber dem ionenleitfähigen keramischen Substrat isoliert werden müssen, was bis zu vier zusätzliche Arbeitsgänge erfordert. Ein weiterer Nachteil besteht in dem verhältnismäßig hohen Preis von Zirkondioxid, so daß die mechanische Stabilität des Sensors unverhältnismäßig teuer erkauft wird.

Die beiden genannten Nachteile werden vermieden, wenn man für das keramische Substrat ein billigeres Material verwendet, das nicht (oder praktisch nicht) ionenleitend ist und daher nicht gegen die Heizelemente isoliert werden muß. Gassensoren dieser Art enthalten ein keramisches Schichtsystem mit zwei benachbarten, verschieden zusammengesetzten Schichten, deren Leitfähigkeiten für Sauerstoffionen sich erheblich unterscheiden. Die Substratschicht ist nicht (oder praktisch nicht) ionenleitend, während die benachbarte Schicht aus Zirkondioxid bei den Betriebstemperaturen eine um Größenordnungen höhere Ionenleitfähigkeit aufweist. Gassensoren mit den für die Substratschicht praktisch in Betracht kommenden Materialien haben sich jedoch als thermisch nicht hinreichend beanspruchbar erwiesen. Es wurde nämlich gefunden, daß sich insbesondere beim Aufheizen auf Betriebstemperaturen, das natürlich schnell erfolgen muß, erst Mikrorisse und danach sichtbare größere Risse bilden, die den Gassensor bald versagen lassen.

JP-A-61 17 2054 löst dieses Problem, in dem sich eine zusätzliche Schicht ("stress release layer") zwischen Substratschicht und der benachbarten ionenleitenden zirkondioxidschicht befindet.

Vorteile der Erfindung

Die keramischen Schichtsysteme nach der Erfindung finden insbesondere Verwendung in Gassensoren. Deren keramische Substratschicht besteht aus wohlfeilen Materialien, wie Aluminiumoxid, und daher sind die Materialkosten niedriger als die von Gassensoren, deren Substratschicht aus Zirkondioxid besteht. Da diese wohlfeilen Materialien auch bei den Betriebstemperaturen der Sensoren nicht (oder praktisch nicht) ionenleitend sind, entfällt die aufwendige Isolierung der Heizelemente. Die Sensoren nach der Erfindung lassen sich mit einer einzigen keramischen Substratfolie aufbauen, auf die die Funktionsschichten, vorteilhaft durch Siebdruck, aufgebracht werden. Da die Drucktechnik billiger als Folientechnik ist, ergibt sich auch eine Verminderung der Herstellungskosten. Die erwähnten Vorteile wiegen schwerer als der zusätzliche Verfahrensschritt, in dem die mit einem ionenleitenden Material, wie Zirkondioxid, beschichteten keramischen Partikel hergestellt werden, die in der ionenleitenden Schicht enthalten sind. Hinsichtlich der Meßempfindlichkeit, der Lebensdauer und der Zuverlässigkeit stehen die Gassensoren mit keramischen Schichtsystemen nach der Erfindung denjenigen mit keramischen Substratschichten aus Zirkondioxid nicht nach. Was die Langzeitstabilität betrifft, so sind Gassensoren mit keramischen Schichtsystemen nach der Erfindung den Gassensoren nach dem Stand der Technik, die eine z.B. aus Aluminiumoxid bestehende keramische Substratschicht und eine benachbarte, aus "unverdünntem" Zirkondioxid bestehende Transportschicht enthalten, deutlich überlegen. Überraschenderweise hat die Einführung von keramischen Partikeln aus einem nicht ionenleitenden Material als Trägerstoff für das Zirkondioxid in der ionenleitenden Schicht keinen merklichen Einfluß auf diejenigen Gebrauchseigenschaften des Gassensors, die mit der spezifischen Leitfähigkeit der ionenleitenden Schicht zusammenhängen.

## Zeichnung

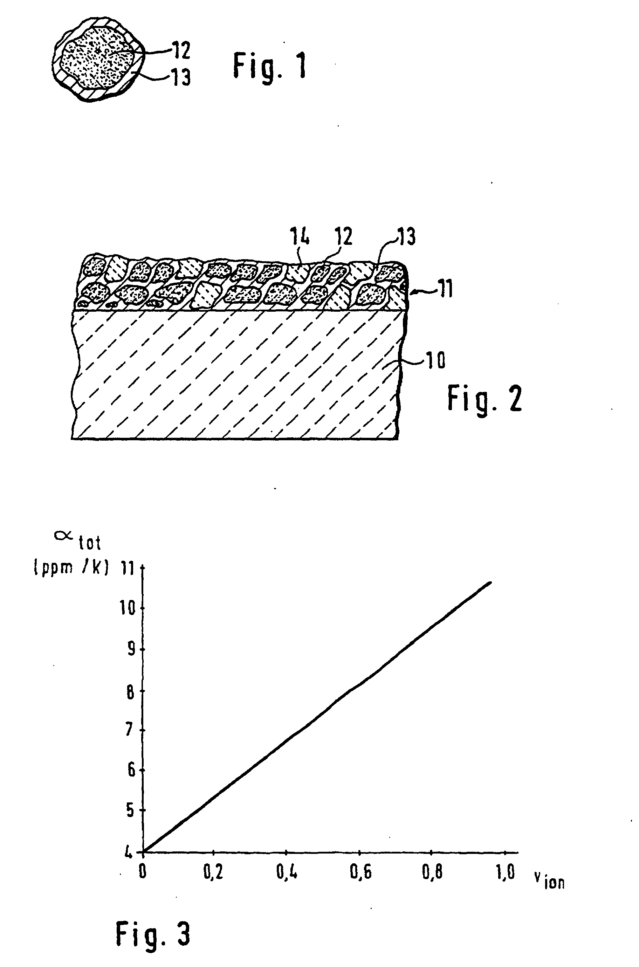

Figur 1 stellt ein keramisches Partikel (12) für ein keramisches Schichtsystem in einem Gassensor dar, das mit ionenleitendem Material (13) beschichtet ist. Figur 2 zeigt ein Schichtsystem für einen Gassensor aus einem Substrat (10) und einer Leitschicht (11), die mit ionenleitfähigem Material (13) beschichtete keramische Partikel (12) sowie unbeschichtete keramische Partikel (14) enthält. In Figur 3 ist der Zusammenhang zwischen dem Volumenanteil $v_{ion}$ des ionenleitenden Materials in einer ionenleitenden Schicht aus mit Zirkondioxid als ionenleitendem Material beschichteten Mullit-Partikeln und dem thermischen Ausdehnungskoeffizienten dieser Leitschicht dargestellt.

## Beschreibung der Erfindung

Die keramischen Schichtsysteme nach der Erfindung werden durch Erhitzen der sogenannten Grünkörper hergestellt, wobei die keramischen Partikel jeder Schicht des Grünkörpers zu einer mechanisch stabileren, verdichteten Schicht sintern und gleichzeitig benachbarte Schichten zusammensintern und dadurch fest verbunden werden. Die erfindungsgemäßen keramischen Schichtsysteme werden vorteilhaft für Gassensoren zur Bestimmung kleiner Mengen von Gasen in Gasgemischen verwendet, die nach den Merkmalen der Verfahrensansprüche hergestellt werden. Das können z.B. Abgassensoren, Feuchtesensoren oder Sensoren zur Bestimmung von Kohlenmonoxid oder -dioxid in Raumluft sein. Die Leitfähigkeit bezieht sich dann, je nach Meßprinzip, auf die ionische oder elektronische Leitfähigkeit der betreffenden Materialien. Keramische Schichtsysteme nach der Erfindung können u.a. auch in Elektroden für Brennstoffzellen verwendet werden. Dann bezieht sich die Leitfähigkeit auf Elektronenleitfähigkeit.

Gassensoren mit den keramischen Schichtsystemen nach der Erfindung vermeiden die beschriebenen Nachteile der erwähnten Gassensoren nach dem Stand der Technik und weisen die zuvor geschilderten Vorteile auf. Hinsichtlich der Art und der Anordnung der Elektroden, der Diffusionsbarrieren, der Abnahme und der Auswertung der Meßsignale weisen die Gassensoren nach der Erfindung keine nennenswerten Unterschiede gegenüber den vielen bekannten Ausführungsformen des Standes der Technik auf. Dasselbe gilt auch für die Heizelemente, wenn man davon absieht, daß sie, wie erwähnt, nicht isoliert werden müssen. Ein wesentliches Merkmal der Gassensoren mit den keramischen Schichtsystemen nach der Erfindung besteht darin, daß die Leitschicht (11), in diesem Fall also eine für Sauerstoffionen leitfähige Schicht, und die keramische Substratschicht (10) aus verschiedenen Materialien bestehen, deren Ionenleitfähigkeiten sich bei der Betriebstemperatur der Gassensoren erheblich unterscheiden. In der Regel besteht ein Unterschied von mindestens vier Zehnerpotenzen, so daß Heizelemente nicht gegenüber der ionenleitfähigen Schicht isoliert werden müssen.

Die keramische Substratschicht (10) besteht aus einem in der Regel oxidischen anorganischen Material, das auch bei den Betriebstemperaturen des Gassensors keine oder praktisch keine Leitfähigkeit für Sauerstoffionen zeigt und bis zur maximalen Arbeitstemperatur der Gassensoren von etwa 800°C stabil ist. Als Beispiele für solche Materialien seien Aluminiumoxid und Magnesiumoxid genannt. Auch Oxidgemische sowie Verbindungen aus verschiedenen Oxiden sind geeignet, wie das als Forsterit bekannte Magnesiumsilikat $Mg_2 SiO_4$ und insbesondere das als Mullit bekannte Aluminiumsilikat mit wechselnden $Al_2O_3$:$SiO_2$ - Verhältnissen, wie $3Al_2O_3.2SiO_2$ bis $2Al_2O_3.SiO_3$, mit fehlgeordneter Sillimanitstruktur. Die keramischen Substratschichten (10) bestehen vorteilhaft aus Mullit und besonders vorteilhaft aus Aluminiumoxid. Für die Herstellung der Grünkörper verwendet man zweckmäßig Pulver mit mittleren Korngrößen von etwa 0,01 bis 2μm, insbesondere etwa 0,2 bis 0,8μm.

Es ist ein wichtiges Merkmal der keramischen Schichtsysteme nach der Erfindung, die in Gassensoren eingesetzt werden, daß die Leitschicht (11) mit beträchtlicher Leitfähigkeit (also beträchtlicher Leitfähigkeit für Sauerstoffionen bei der Betriebstemperatur) keramische Partikel (12) enthält, die selbst eine geringe Leitfähigkeit aufweisen (also bei der Betriebstemperatur keine oder praktisch keine Sauerstoffionenleitung zeigen), aber mit einem Material (13) beschichtet sind, das eine hohe Leitfähigkeit (also eine hohe Sauerstoffionenleitfähigkeit bei der Betriebstemperatur) aufweist. Die Leitschicht (11) zeigt dementsprechend eine Ionenleitfähigkeit bei der Betriebstemperatur, die zwar unterhalb derjenigen des Materials (13) liegt, aber im Vergleich zu derjenigen der keramischen Substratschicht (10) beträchtlich und jedenfalls für die Verwendung in Gassensoren hinreichend hoch ist. Die Ionenleitfähigkeit der Leitschicht liegt bei 800°C im allgemeinen bei $3.10^{-4}$ bis $8.10^{-4}$ $(\Omega cm)^{-1}$, während beispielsweise die Ionenleitfähigkeit des Zirkondioxids bei derselben Temperatur bei $10^{-3}$ $(\Omega.cm)^{-1}$ liegt.

Tetragonales oder kubisches Zirkondioxid ist das bevorzugte Material mit hoher Ionenleitfähigkeit in der Leitschicht (11). Ein anderes geeignetes ionenleitfähiges Material ist beispielsweise Wismut(III)-oxid. Das Zirkondioxid muß einen ausreichenden Anteil, in der Regel 3,5 bis 5 Molprozent, eines der bekannten Stabilisatoren, wie Yttrium(III)-oxid, Scandium(III)-oxid. Magnesiumoxid und Calciumoxid, enthalten, der die ionenleitfähige Modifikation des Zirkondioxids stabilisiert.

Die keramischen Partikel (12) können aus den gleichen Materialien ausgewählt werden, die für die keramische Substratschicht (10) genannt wurden. Sie bestehen vorzugsweise aus Mullit. Die keramischen Partikel (12) müssen feinteilig sein, damit beim Sintern eine dichte, zusammenhängende Phase entsteht.

Die mittlere Korngröße sollte, wie bei den Materialien für die keramische Substratschicht, etwa 0,01 bis 2µm, insbesondere etwa 0,2 bis 0,8µm betragen.

Die Materialien für die keramische Substratschicht (10) und der keramischen Partikel (12) werden zweckmäßig so ausgewählt, daß der thermische Ausdehnungskoeffizient der Leitschicht (11) bei den später diskutierten Mengenverhältnissen der Bestandteile der Leitschicht (11) dem thermischen Ausdehnungskoeffizienten der keramischen Substratschicht (10) näherkommt als der thermische Ausdehnungskoeffizient des ionenleitenden Materials (13). Die Langzeitstabilität der Gassensoren ist umso besser, je mehr sich der thermische Ausdehnungskoeffizient der ionenleitenden Schicht (11) dem thermischen Ausdehnungskoeffizienten der keramischen Substratschicht (10) annähert. Die erwähnte zweckmäßige Auswahl der Materialien beruht auf der Erkenntnis, daß der Thermoschock und das dadurch ausgelöste Versagen der erwähnten Gassensoren nach dem Stand der Technik auf Spannungen an der Phasengrenzfläche zwischen ionenleitender Schicht (11) und keramischer Substratschicht (10) zurückgehen, die insbesondere bei raschen Temperaturänderungen, wie sie beim Aufheizen der Sensoren auf Betriebstemperatur auftreten, durch die deutlich unterschiedlichen thermischen Ausdehnungskoeffizienten der betreffenden Materialien verursacht werden.

Die keramischen Partikel (12) werden in üblicher Weise mit dem ionenleitenden Material (13) beschichtet. Dies kann beispielsweise durch Aufsputtern des entsprechenden Metalls, wie Zirkon, in oxidierender Atmosphäre auf den gewirbelten oder gerührten feinteiligen Trägerstoff geschehen. Stabilisiertes Zirkondioxid wird aufgesputtert, indem als Kathode Zirkon verwendet wird, das die entsprechenden Mengen an denjenigen Metallen legiert enthält, die die erwähnten stabilisierenden Oxide ergeben. Der feinteilige Trägerstoff kann auch in einem Sol-Gel-Verfahren beschichtet werden. Dazu kann man z.B. den feinteiligen Trägerstoff in einer alkoholischen Lösung eines entsprechenden Metallalkoholats, z.B. eines Zirkonalkoholats, wie Zirkontetraethylat, und gegebenenfalls eines oder mehrerer weiterer, die erwähnten stabilisierende Oxide ergebender Metallalkoholate suspendieren und durch langsame Zugabe von Wasser oder verdünntem Ammoniak die Hydroxide auf dem feinteiligen Trägerstoff niederschlagen. Diese ergeben beim Erwärmen des abgetrennten beschichteten Trägerstoffs auf etwa 200 bis 400°C die gewünschte Oxidschicht.

Es ist wichtig für die Gebrauchseigenschaften des Gassensors, daß das Verhältnis der Korngröße der keramischen Partikel (12) zu der Schichtdicke des ionenleitenden Materials (13) optimal gewählt wird. Insoweit besteht nicht selten ein Zielkonflikt insofern, als im Interesse einer hinreichenden Leitfähigkeit der ionenleitenden Schicht (11) ein relativ großer Anteil an ionenleitendem Material (13) und somit eine möglichst große Schichtdicke erwünscht ist. Der Anteil an ionenleitendem Material (13) sollte zumindest so groß sein, daß beim Sintern eine kontinuierliche Phase aus ionenleitendem Material (13) entsteht, die die keramischen Partikel (12) bedeckt, obwohl beim Sintern ionenleitendes Material (13) aus den Korngrenzen hinaus in die Hohlräume zwischen den keramischen Partikeln (13) wandert. Andererseits kann der Wunsch nach einer möglichst weitgehenden Annäherung des thermischen Ausdehnungskoeffizienten der ionenleitenden Schicht (11) an denjenigen der keramischen Substratschicht möglichst geringe Anteile an ionenleitendem Material (13) und somit geringe Schichtdicken erfordern. Das trifft z. B. zu, wenn das ionenleitende Material Zirkondioxid ist und sowohl die keramische Substratschicht (10) als auch die keramischen Partikel (12) aus Mullit bestehen. Hier liegt die Lösung des Zielkonflikts in möglichst geringen Mengen Zirkondioxid. Das optimale Mengenverhältnis von Zirkondioxid (13) zu keramischen Partikeln (12) läßt sich für eine gegebene mittlere Korngröße der keramischen Partikel (12) durch orientierende Versuche unschwer ermitteln. Aber auch bei nicht optimalen Mengenverhältnissen sind die Gebrauchseigenschaften der entsprechenden Gassensoren und ist insbesondere die Langzeitstabilität deutlich besser als die von Gassensoren, die "unverdünntes" Zirkondioxid als ionenleitende Schicht (11) und eine keramische Substratschicht aus Mullit enthalten.

Für die zweckmäßige Wahl der Dicke der Schicht aus dem ionenleitenden Material (13) sind auch die folgenden theoretischen Überlegungen nützlich. Nach Coble, Sintering Crystalline Solids, I. Intermediate and Final State Diffusion Models, J.Appl.Phys. 32 (1961), 787 ff., kann man für das Gefügekorn in der dichtgesinterten Phase näherungsweise die Form eines Tetrakaidekahedrons annehmen, des nach Kelvin in idealer weise raumerfüllenden Körpers. Dessen Inkugeldurchmesser beträgt das 0,88 fache des Durchmessers einer volumengleichen Kugel. Nimmt man an, daß die Schichtdicke x der Differenz der Radien der volumengleichen Kugel und der Inkugel entspricht, so ergibt sich für das Verhältnis der Schichtdicke x zum Radius R der (als Kugel angenommenen) keramischen Partikel (12) die Beziehung

$$\frac{x}{R} \geq \frac{0,12}{0,88} \ 0,14$$

Der Volumenanteil $v_{ion}$ des ionenleitenden Materials (13), dessen Volumen als $V_{ion}$ bezeichnet wird, bezogen auf das Gesamtvolumen $V_{tot}$ aus den Volumina des ionenleitendem Materials (13) und der keramischen Partikel (12), beträgt dann

$$v_{ion} = \frac{V_{ion}}{V_{tot}} = 1 - \frac{1}{1+x/R}$$

Für $x/R = 0,14$ ergibt sich daraus ein Volumenanteil $v_{ion}$ des ionenleitenden Materials (13) von 0,33, entsprechend 33 Prozent.

Der thermische Ausdehnungskoeffizient $\alpha_{tot}$ der ionenleitenden Schicht (11) kann mit guter Näherung nach der Mischungsregel aus dem Ausdehnungskoeffizienten der keramischen Partikel $\alpha_{port}$ und dem Ausdehnunqskoeffizienten $\alpha_{ion}$ des ionenleitenden Materials (13) abgeschätzt werden:

$$\alpha_{tot} = \alpha_{part} + (\alpha_{ion} - \alpha_{part}) \, v_{ion}$$

Für den Fall, daß der keramische Träger aus Aluminiumoxid ($\alpha\ Al_2O_3 = 7{,}7$ ppm/K) besteht, die keramischen Partikel (12) in der ionenleitenden Schicht (11) aus Mullit ($\alpha_{Mull} = 4$ ppm/K) bestehen und das ionenleitende Material (13) Zirkondioxid ($\alpha\ ZrO_2 = 11$ ppm/K) ist, ergibt sich, daß ein Volumenanteil $v_{ion}$ des Zirkondioxids von 0,4 bis 0,5, entsprechend 40 bis 50 Volumenprozent, erforderlich ist, damit der thermische Volumenprozent, erforderlich ist, damit der thermische Ausdehnungskoeffizient der ionenleitenden Schicht (11) dem der keramischen Substratschicht (10) gleichkommt. Dies läßt sich aus der Figur 3 ablesen, die den linearen Zusammenhang zwischen dem Volumenanteil $v_{ion}$ des Zirkondioxids an den mit Zirkondioxid (13) beschichteten Mullitteilchen (12) und dem thermischen Ausdehnungskoeffizienten $\alpha_{tot}$ der ionenleitenden Schicht (11) wiedergibt. Demnach müßte für die einzustellende Schichtdicke die Beziehung

$$0{,}2 \leq \frac{x}{R} \leq 0{,}3$$

gelten.

Vielfach ist es zweckmäßig, neben den mit dem ionenleitfähigen Material (13) beschichteten keramischen Partikeln (12) unbeschichtete Partikel (14) aus demselben oder einem anderen keramischen Material mitzuverwenden. Dies ist eine weitere Option, durch zweckentsprechende Materialauswahl den thermischen Ausdehnungskoeffizienten der Leitschicht (11) demjenigen der keramischen Substratschicht (10) anzunähern. Dabei ist jedoch zu beachten, daß das ionenleitfähige Material (13) in der Leitschicht (11) in genügender Menge vorhanden sein muß, um eine kontinuierliche Phase zu bilden und somit eine hinreichende Ionenleitfähigkeit zu gewährleisten, wie zuvor erläutert.

Beim Aufbau von Sensoren nach der Erfindung geht man zweckmäßig von einer in üblicher Weise hergestellten Substratfolie aus einem Material aus, das praktisch keine Ionenleitfähigkeit bei den Betriebstemperaturen des Gassensors zeigt. Auf diese Substratfolie werden, wiederum in üblicher Weise, Funktionsschichten aufgebracht, beispielsweise durch Siebdruck. Auf die eine Seite der Substratfolie wird zunächst eine ionenleitfähige Schicht gedruckt, und danach werden die weiteren Funktionsschichten aufgedruckt. Auf die andere Seite der Substratfolie druckt man die Heizelemente, die durch die Substratfolie gegenüber der ionenleitenden Schicht elektrisch isoliert sind. Zum Drucken der ionenleitenden Schicht verwendet man eine Dickschichtpaste, die aus dem mit dem ionenleitenden Material beschichteten Trägerstoff hergestellt wurde. Sie enthält, ebenso wie die Substratfolie, die üblichen Binde- und Plastifiziermittel und gegebenenfalls weitere übliche Zusatzstoffe, wie Lösungsmittel zur Einstellung einer für den Druck geeigneten Konsistenz.

Wenn die letzte Funktionsschicht gedruckt ist, wird der Grünkörper, also das gesamte Schichtsystem, in bekannter Weise durch Erhitzen zunächst von den Binde- und Plastifiziermitteln sowie etwaigen anderen organischen Bestandteilen befreit und dann in wiederum bekannter Weise bei noch höheren Temperaturen gesintert.

## Patentansprüche

1. Keramisches Schichtsystem aus mindestens zwei Schichten, deren Leitfähigkeiten sich erheblich unterscheiden, enthaltend eine keramische Substratschicht (10) mit geringer Leitfähigkeit und mindestens eine weitere, benachbarte keramische Schicht mit beträchtlicher Leitfähigkeit als Leitschicht (11), **dadurch gekennzeichnet, daß** die Leitschicht (11) keramische Partikel (12) enthält, die selbst eine geringe Leitfähigkeit aufweisen, jedoch mit einem Material (13) beschichtet sind, das eine hohe Leitfähigkeit aufweist und dadurch die beträchtliche Leitfähigkeit der Leitschicht (11) bewirkt.

2. Keramisches Schichtsystem nach Anspruch 1, **dadurch gekennzeichnet, daß** es durch Erhitzen eines Grünkörpers hergestellt wird, wobei die keramischen Partikel jeder Schicht des Grünkörpers zu einer mechanisch stabileren, verdichteten Schicht sintern und gleichzeitig benachbarte Schichten zusammensintern und dadurch fest verbunden werden.

3. Keramisches Schichtsystem nach Anspruch 1 oder 2, **dadurch gekennzeichnet, daß** die Leitfähigkeiten der mindestens zwei Schichten sich auf die Leitung von Ionen oder Elektronen beziehen und um mindestens vier Größenordnungen verschieden sind.

**4.** Keramisches Schichtsystem nach den Ansprüchen 1 bis 3, **dadurch gekennzeichnet, daß** die keramischen Partikel (12) der Leitschicht derart mit Material (13) beschichtet sind, daß sich beim Sintern eine kontinuierliche Phase aus diesem Material (13) ausbildet.

**5.** Keramisches Schichtsystem nach den Ansprüchen 1 bis 4, **dadurch gekennzeichnet, daß** das Material der keramischen Substratschicht (10) und das Material der keramischen Partikel (12) der Leitschicht (11) so ausgewählt werden, daß sich der thermische Ausdehnungskoeffizient der Leitschicht (11) dem der keramischen Substratschicht (10) annähert oder ihm gleichkommt.

**6.** Keramisches Schichtsystem nach den Ansprüchen 1 bis 5, **dadurch gekennzeichnet, daß** in der Leitschicht (11) neben den mit dem Material (13) beschichteten keramischen Partikeln (12) unbeschichtete keramische Partikel (14) aus demselben oder einem anderen keramischen Material vorliegen.

**7.** Keramisches Schichtsystem nach Anspruch 6, **dadurch gekennzeichnet, daß** der Anteil der nicht beschichteten keramischen Partikel (14) in der Leitschicht (11) bis zu etwa 20 Volumenprozent beträgt.

**8.** Keramisches Schichtsystem nach den Ansprüchen 1 bis 7, **dadurch gekennzeichnet, daß** es Teil eines Gassensors zur Bestimmung kleiner Mengen von Gasen in Gasgemischen ist und die Leitfähigkeit sich auf den Transport von Sauerstoffionen bezieht.

**9.** Keramisches Schichtsystem nach Anspruch 8, **dadurch gekennzeichnet, daß** das Material (13), das das Potential der Leitschicht (11) für den Transport von Sauerstoffionen bewirkt, stabilisiertes Zirkondioxid ist.

**10.** Keramisches Schichtsystem nach Anspruch 9, **dadurch gekennzeichnet, daß** das Zirkondioxid durch Scandium(III)-oxid, Yttrium(III)-oxid, Magnesiumoxid und/oder Calciumoxid stabilisiert ist.

**11.** Keramisches Schichtsystem einem der Ansprüche 8 bis 10, **dadurch gekennzeichnet, daß** die Substratschicht (10) aus Aluminiumoxid und/oder Mullit besteht.

**12.** Keramisches Schichtsystem nach einem der Ansprüche 8 bis 11, **dadurch gekennzeichnet, daß** die Feststoffpartikel (12) aus Mullit bestehen.

**13.** Verfahren zur Herstellung eines Gassensors zur Bestimmung kleiner Mengen von Gasen in Gasgemischen, **dadurch gekennzeichnet, daß** man auf eine Substratfolie (10) aus einem nicht ionenleitfähigen Material nach an sich bekannten Verfahren eine aus keramischen Partikeln (12), die mit einem bei der Betriebstemperatur des Gassensors ionenleitenden Material (13) beschichtet sind, und gegebenenfalls aus unbeschichteten keramischen Partikeln (14) bestehende Schicht aufbringt, auf das so erzeugte, aus zwei Schichten bestehende System wiederum nach bekannten Verfahren weitere Funktionsschichten aufbringt, den Grünkörper in bekannter Weise durch Erhitzen von Binde- und Plastifiziermitteln sowie gegebenenfalls anderen organischen Bestandteilen befreit und durch Co-firing bei noch höheren Temperaturen sintert.

**14.** Verfahren nach Anspruch 13, **dadurch gekennzeichnet, daß** die Substratfolie (10) aus Aluminiumoxid und/oder Mullit besteht, die keramischen Partikel (12, 14) aus Mullit bestehen und das bei der Betriebstemperatur des Gassensors ionenleitende Material (13) stabilisiertes Zirkondioxid ist.

**Claims**

**1.** Ceramic layer system comprising at least two layers, the conductivities of which differ considerably, including a ceramic substrate layer (10) with a low conductivity and at least one further, adjacent ceramic layer with a considerable conductivity as conductive layer (11), **characterized in that** the conductive layer (11) contains ceramic particles (12) which themselves have a low conductivity but are coated with a material (13) which has a high conductivity and thereby produces the considerable conductivity of the conductive layer (11).

**2.** Ceramic layer system according to Claim 1, **characterized in that** it is produced by heating a powder preform, during which operation the ceramic particles of each layer of the powder preform sinter together to form a more mechanically stable, compacted layer and, at the same time, adjacent layers sinter together and are thereby fixedly joined.

**3.** Ceramic layer system according to Claim 1 or 2, **characterized in that** the conductivities of the at least two layers relate to the conduction of ions or electrons and differ by at least four orders of magnitude.

**4.** Ceramic layer system according to Claims 1 to 3, **characterized in that** the ceramic particles (12) of the conductive layer are coated with material (13) in such a manner that, during the sintering, a continuous phase is formed from this material (13).

**5.** Ceramic layer system according to Claims 1 to 4, **characterized in that** the material of the ceramic substrate layer (10) and the material of the ceramic particles (12) of the conductive layer (11) are selected in such a way that the coefficient of thermal expansion of the conductive layer (11) is close or equal to that of the ceramic substrate layer (10).

**6.** Ceramic layer system according to Claims 1 to 5, **characterized in that** the conductive layer (11) contains, in addition to the ceramic particles (12) which are coated with the material (13), uncoated ceramic particles (14) comprising the same or a different ceramic material.

**7.** Ceramic layer system according to Claim 6, **characterized in that** the proportion of the uncoated ceramic particles (14) in the conductive layer (11) is up to approximately 20 per cent by volume.

**8.** Ceramic layer system according to Claims 1 to 7, **characterized in that** it is part of a gas sensor for detecting small quantities of gases in gas mixtures, and the conductivity relates to the transport of oxygen ions.

**9.** Ceramic layer system according to Claim 8, **characterized in that** the material (13) which is responsible for the potential of the conductive layer (11) to transport oxygen ions is stabilized zirconia.

**10.** The ceramic layer system as claimed in Claim 9, **characterized in that** the zirconia is stabilized by scandium(III) oxide, yttrium(III) oxide, magnesium oxide and/or calcium oxide.

**11.** Ceramic layer system according to one of Claims 8 to 10, **characterized in that** the substrate layer (10) consists of aluminium oxide and/or mullite.

**12.** Ceramic layer system according to one of Claims 8 to 11, **characterized in that** the solid particles (12) consist of mullite.

**13.** Process for producing a gas sensor for detecting small quantities of gases in gas mixtures, **characterized in that** processes which are known per se are used to apply a layer which consists of ceramic particles (12), which are coated with a material (13) which conducts ions at the operating temperature of the gas sensor, and if appropriate uncoated ceramic particles (14) to a substrate sheet (10) consisting of a material which does not conduct ions, once again known processes are used to apply further functional layers to the two-layer system which has been produced in this way, binders and plasticizers, as well as any other organic constituents, are removed from the powder preform in a known way by heating, and the powder preform is sintered by co-firing at even higher temperatures.

**14.** Process according to Claim 13, **characterized in that** the substrate sheet (10) consists of aluminium oxide and/or mullite, the ceramic particles (12, 14) consist of mullite and the material (13) which conducts ions at the operating temperature of the gas sensor is zirconia.

**Revendications**

**1.** Système céramique stratifié comportant au moins deux couches dont les conductivités sont très différentes, à savoir une première couche de substrat (10) céramique à faible conductivité et au moins une autre couche céramique, voisine, à conductivité importante, formant une couche conductrice (11), **caractérisé en ce que**
la couche conductrice (11) contient des particules céramiques (12) ayant elles-mêmes une faible conductivité mais revêtues d'une matière (13) à forte conductivité et donnant ainsi une conductivité importante à la couche conductrice (11).

**2.** Système céramique stratifié selon la revendication 1, **caractérisé en ce qu'**
il est obtenu par chauffage d'un produit non cuit, les particules céramiques de chaque couche du produit non cuit étant frittées pour donner une couche plus dense mécaniquement plus solide et en même temps pour réunir par frittage les couches voisines en les reliant solidairement.

**3.** Système céramique stratifié selon l'une quelconque des revendications 1 ou 2, **caractérisé en ce que**
la conductivité d'au moins deux couches concerne la conductivité des ions ou des électrons et ces conductivités sont différentes l'une de l'autre au moins de quatre ordres de grandeurs.

**4.** Système céramique stratifié selon l'une quelconque des revendications 1 à 3, **caractérisé en ce que**
les particules céramiques (12) de la couche conductrice sont revêtues avec de la matière (13) pour qu'au frittage on obtient une phase continue de cette matière (13).

**5.** Système céramique stratifié selon l'une quelconque des revendications 1 à 4, **caractérisé en ce que**
la matière de la couche de substrat céramique (10) et la matière des particules céramiques (12) de la couche conductrice (11) sont choisies pour que le coefficient de dilatation thermique de la couche conductrice (11) se rapproche ou soit égal à celui de la couche de substrat céramique (10).

**6.** Système céramique stratifié selon l'une quelconque des revendications 1 à 5,
**caractérisé en ce que**
dans la couche conductrice (11), à côté des particules céramiques (12) revêtues de la matière (13) on a des particules céramiques (14) non revêtues de la même matière céramique ou d'une autre matière céramique.

**7.** Système céramique stratifié selon la revendication 6,
**caractérisé en ce que**
la teneur en particules céramiques (14) non revêtues dans la couche conductrice (11) va jusqu'à environ 20 % en volume.

**8.** Système céramique stratifié selon l'une quelconque des revendications 1 à 7,
**caractérisé en ce qu'**
il fait partie d'un capteur de gaz pour déterminer de faibles quantités de gaz dans des mélanges gazeux et la conductivité se rapporte au transport des ions d'oxygène.

**9.** Système céramique stratifié selon la revendication 8,
**caractérisé en ce que**
la matière (13) qui produit le potentiel de la couche conductrice (11) pour le transport des ions d'oxygène est du dioxyde de zirconium stabilisé.

**10.** Système céramique stratifié selon la revendication 9,
**caractérisé en ce que**
le dioxyde de zirconium est stabilisé par de l'oxyde de scandium (III), de l'oxyde d'yttrium (III), de l'oxyde de magnésium et/ou de l'oxyde de calcium.

**11.** Système céramique stratifié selon l'une quelconque des revendications 8 à 10,
**caractérisé en ce que**
la couche de substrat (10) est en oxyde d'aluminium et/ou en mullite.

**12.** Système céramique stratifié selon l'une quelconque des revendications 8 à 11,
**caractérisé en ce que**
les particules de matière solide (12) sont en mullite.

**13.** Procédé de fabrication d'un capteur de gaz pour déterminer de petites quantités de gaz dans des mélanges gazeux,
**caractérisé en ce que**
sur un film substrat (10) en une matière non conductrice d'ions, on dépose selon un procédé connu, une matière (13) formée de particules de céramique (12), conductrices d'ions à la température de fonctionnement du capteur de gaz et le cas échéant une couche formée de particules (14) non revêtues, et sur le système à deux couches ainsi réalisé, on applique de nouveau, selon un procédé connu, d'autres couches fonctionnelles, on élimine du produit non cuit, de manière connue, par chauffage, pour éliminer les liants et agents plastifiants et le cas échéant également d'autres composants organiques et par cuisson simultanée on fritte à des températures plus élevées.

**14.** Procédé selon la revendication 13,
**caractérisé en ce que**
le film de support (10) est en oxyde d'aluminium et/ou de mullite, les particules céramiques (12, 14) sont en mullite et la matière (13) conductrice d'ions à la température de fonctionnement du capteur de gaz est du dioxyde de zirconium stabilisé.

Fig. 1

Fig. 2

Fig. 3